# EUROPEAN PATENT SPECIFICATION

(11) **EP 1 624 639 B1**
(45) Date of publication and mention of the grant of the patent: **08.04.2009**
(21) Application number: 04445080.7
(22) Date of filing: 02.08.2004
(51) Int. Cl.: H04L 29/06, H04L 12/28, H04W 12/06

(54) **Sim-based authentication**
SIM basierte Authentifizierung
Authentification à base de SIM

(43) Date of publication of application: 08.02.2006
(73) Proprietor: Service Factory AB, 117 43 Årsta (SE)
(72) Inventor: Almgren, Gunnar, 12133 Enskededalen (SE)
(74) Representative: Akerman, Marten Lennart

(56) References cited:
- WO-A-03/094438
- WO-A-20/04097590
- ALA-LAURILA J ET AL: "WIRELESS LAN ACCESS NETWORK ARCHITECTURE FOR MOBILE OPERATORS" IEEE COMMUNICATIONS MAGAZINE, IEEE SERVICE CENTER. PISCATAWAY, N.J, US, vol. 39, no. 11, November 2001 (2001-11), pages 82-89, XP001107810 ISSN: 0163-6804

## Description

### Technical field

The present invention relates to SIM-based authentication, and especially to SIM-based authentication over access networks not supporting the security protocol 802.1X.

### Background of the invention

Mobile operators want to deploy services based on Wireless LANs and the standard 802.11 where a traditional GSM or UMTS SIM-card is used for authentication.

The standard approach to SIM-based authentication for wireless LAN, WLAN, services recommended by the GSM Association, GSMA, and the Third Generation Partnership Project, 3GPP, relies on EAP-SIM authentication and 802.1X access networks. A considerable part of the WLAN hotspots used by the mobile operators' customers will be provided by third party Wireless ISPs, WISPs, many of which are unlikely to upgrade to network enabling the security protocol 802.1X in the short to medium term future however. Mobile operators therefore need to deploy a SIM-based authentication architecture that works also in an access network that is not 802.1X enabled.

Solutions for SIM-based authentication that do not require 802.1X exist on the market. However, these solutions are proprietary, i.e. not based on EAP-SIM.

A solution based on EAP-SIM but not requiring the security protocol 802.1X is preferable since it provides for the smooth introduction of 802.1X based access network and final migration to a pure 802.1X/EAP-SIM situation.

The document WO03094438 discloses EAP/SIM-based authentication (a part of the security protocol for 802.1X).

### Summary of the invention

An aim of the present invention is to provide SIM-based authentication over access networks not supporting the security protocol 802.1X.

An aspect of the aim is to provide SIM-based authentication for WLAN services based on EAP-SIM but not requiring the security protocol 802.1X.

The aim and the aspect amongst others are achieved by a method and a system according to the independent claims. Embodiments of the invention are defined in the dependent claims.

The following acronyms and abbreviation will be used in the description of the present invention.
- 3GPP: Third Generation Partnership Project
- AP: Access Point
- CUID: Chargeable User ID
- DB: Database
- DHCP: Dynamic Host Control Protocol
- GSM: Global System for Mobile Communications
- GSMA: GSM Association
- EAP: Extensible Authentication Protocol
- HLR: Home Location Register
- HTTP: Hypertext Transfer Protocol
- IMSI: International Mobile Subscriber Identity
- IP: Internet Protocol
- ISDN: Integrated Services Digital Network
- ISP: Internet Service Provider
- LAN: Local Area Network
- MAP: Mobile AP
- MS: Mobile Station
- MSISDN: Mobile Subscriber ISDN
- MSK: Master Session Key
- OSC+: Orbyte Service Controller Plus
- RADIUS: Remote Authentication Dial-In User Service
- SIM: Subscriber Identification Module
- UAM: Universal Access Method
- UMTS: Universal Mobile Telecommunications System
- WiFi: Wireless Fidelity
- WISP: Wireless ISP
- WLAN: Wireless LAN

### Brief description of the drawings

The present invention will now be described with reference to the accompanying drawings, in which:
FIG. 1 schematically shows an embodiment of the system according to the invention;
FIG. 2 schematically shows the method steps according to an embodiment of the present invention;
FIG. 3 schematically shows authentication protocol stacks in the case of an EAP-SIM login; and
FIG. 4 schematically shows authentication protocol stacks in the case of an UAM login.

### Detailed description of the invention

Solutions for SIM-based authentication that do not require 802.1X exist on the market. However, these solutions are proprietary, i.e. not based on EAP-SIM. The invention described in this document is unique in that it:
- does not require any changes to standard EAP-SIM server. The same server can be used for 802.1X and non 802.1X based authentication, and it
- does not require additional technology or software at the WISP. Only support for UAM login and "walled garden" which are standard features.

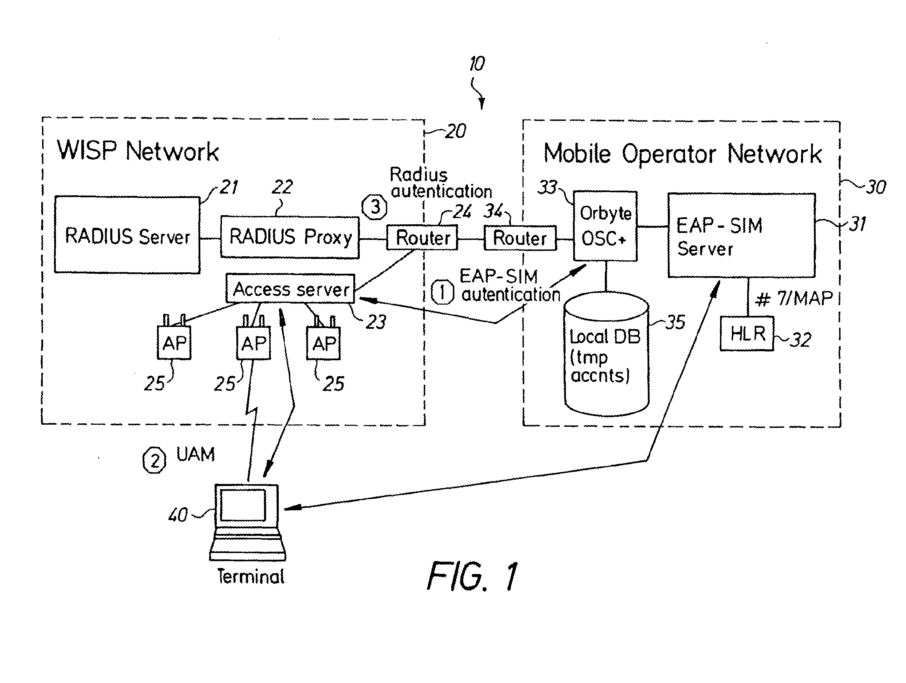

The present invention will now be described with reference to the accompanying figures, FIG. 1 - 4. In the figures, the same reference numerals are used for the same or similar components or parts of the invention.

The invention deploys a two-step login where the end-user in the first step is SIM-authenticated towards a mobile operators EAP-SIM server and then, in a second step, is back-authenticated towards a WISP access gateway using a temporary username/password generated during the SIM-authentication step.

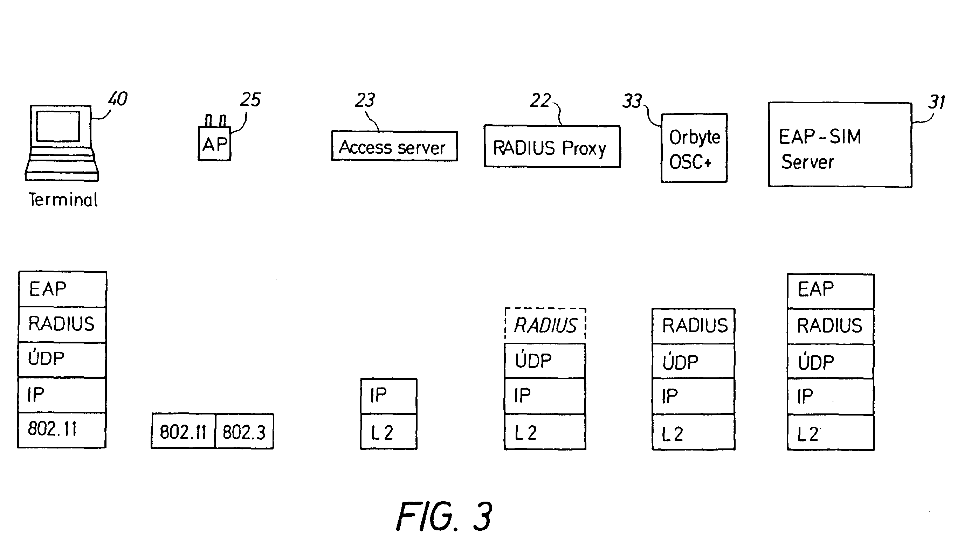

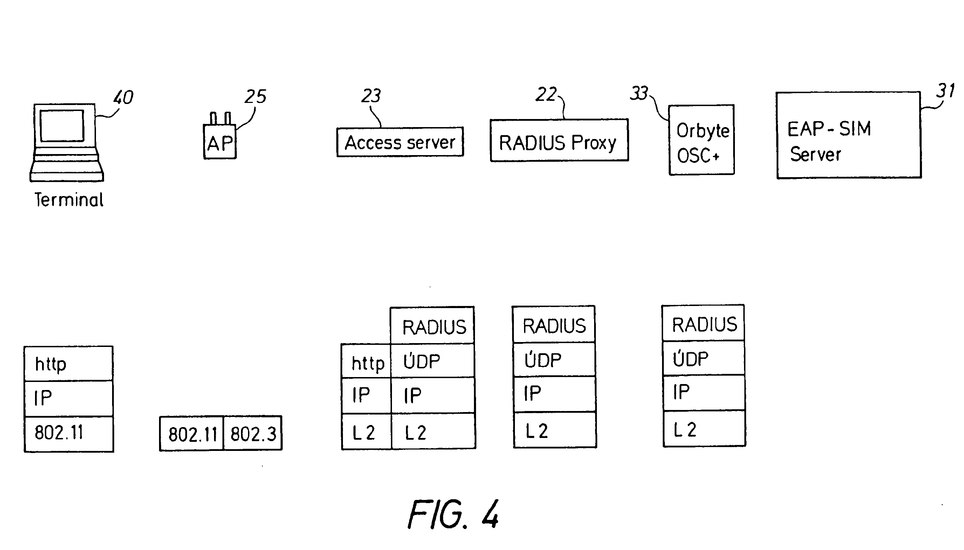

The SIM-authentication procedure is performed according to the EAP-SIM but will not be based on an 802.1X access network. The client software will furnish a protocol stack where EAP is transported in some underlying protocol, such as RADIUS or HTTP. FIG. 3 illustrates the authentication protocol stacks for EAP-SIM login, i.e. the first login step (in the case RADIUS is used as bearer). The second step will be based on web-based login according to the Universal Access Method, UAM, defined by the WiFi Alliance. FIG. 4 illustrates the authentication protocol stacks for the UAM login, i.e. the second login step also called the back-authentication step.

As schematically illustrated in FIG. 1, an embodiment of the inventive system 10 comprises a first access network 20 and a second access network 30. In the shown embodiment, the first access network 20 is realised as a Wireless Internet Service Provider network, WISP network, and the second access network 30 is realised as a mobile operator network.

The WISP network 20 comprises a server 21 for Remote Authentication dial-In User Service, e.g. a RADIUS server, which is communicatively connected to a RADIUS proxy 22. An access server 23 is further comprised in the WISP network 20. The RADIUS proxy 22 and the access server 23 are communicatively connected to a first router 24 comprised in the WISP network 20. The WISP network 20 comprises further one or several access points, AP, 25 communicatively connected to the access server 23.

The mobile operator network 30 comprises an EAP-SIM server 31 communicatively connected to a subscriber database 32, e.g. a Home Location Record, HLR, and a special RADIUS proxy server 33, here denoted as an Orbyte Service Controller Plus, OSC+. The mobile operator server OSC+ 33 is further communicatively connected to a second router 34and to a local database 35. The local database 35 is configured to store information about temporary accounts.

The special RADIUS proxy server, Orbyte Service Controller Plus, OSC+, 33, will act as a front-end towards the EAP-SIM server 31. In fact several proxy servers OSC+ may be deployed depending on the desired performance and resilience levels required.

The mobile operator server OSC+ 33 is further configured to extract relevant information from the RADIUS exchange between the client and the EAP-SIM server 31 and create the temporary accounts to be inserted into the local database 35.

The IP address of the mobile operator's OSC+ server 33 is configured as part of the WISP "walled garden".

During the EAP-SIM authentication, the client and the EAP-SIM server will derive a Master Session Key, MSK, based on the GSM authentication keys. In an 802.1X scenario the MSK will be used for the link layer encryption between the client and the access point, AP, 25. The EAP-SIM server will pass the key in the RADIUS access accept message, which is to be received by the AP in the 802.1X and the OSC+ in the non-802.1X case. The first 32 bytes of the MSK will be carried in the attribute MS-MPPE-RECV-KEY and the second 32 bytes in the MS-MPPE-SEND-KEY.

The present invention does not use the MSK for link layer encryption, but instead the MSK will be used as a temporary password for the UAM-login that will follow the EAP-SIM authentication.

The GSM Association had advised the use of a special RADIUS attribute, Chargeable User ID, CUID, in order to inform the visited network of the real identity of the user. This is required since the EAP-SIM login may use pseudonyms as user identities as a measure to protect user privacy. According to the present invention, the visited operator will have the real user information anyway since the IMSI will be used as username for the UAM login. However, the CUID will be used by the mobile operator server OSC+ 33 to obtain the username for the temporary account.

The mobile operator server OSC+ 33 is further configured to extract and remove the MSK and CUID from the RADIUS message before it is passed onwards towards the client's user terminal 40, since these parameters needs to be removed to avoid carrying them in the clear over the radio segment.

The first router 24 and the second router 34 are configured to provide communication between the first access network 20 and the second access network 30.

The inventive system comprises also one or several user terminals 40 configured to communicate with the mobile operator network 30 via the WISP network 20. The user terminal 40 is realised as a computer, laptop, Personal Digital Assist and/or another computerised device.

In summary, the present invention comprises the following steps:
a) The client software in a user device 40 authenticates towards a mobile operator's EAP-SIM server 31. The authentication procedure will adhere to the EAP-SIM procedure. A mobile operator server OSC+ 33 is configured to extract the MSK and CUID parameters from a RADIUS access accept message emanating from the EAP-SIM server 31 and use this information to derive temporary username/password to be stored in the local database 35.
b) The client will perform a Universal Access Method, UAM, login towards a WISP access server or gateway 23 using the temporary credentials of the form usr=IMSI@MobileOperator.com/pw=f(MSK), where usr is the username, IMSI is the International Mobile Subscriber Identity, the MobileOperator.com is the realm (domain name) of the mobile operator, pw is the password, and MSK is the Master Session Key. F(MSK) denotes that some function will be applied to derive a valid password from the MSK. The derivation procedure can be something like Base-64 encoding the MSK and then truncating the resulting string to 16 characters (some access gateways does not support passwords longer than 16 characters). Alternatively, more advanced schemes involving cryptographic algorithms can be applied.
c) A WISP RADIUS proxy 22 is configured to inspect the realm part of the username, e.g. the "MobileOperator.com" part, and hence proxy the request onwards towards the mobile operator server OSC+ 33. The mobile operator server OSC+ 33 will match the supplied username/password with the temporary account stored in the local database 35. If credentials match, a RADIUS access accept message will be sent towards the WISP RADIUS proxy 22 and temporary credentials will be removed from the local database 35. Unused credentials will be automatically removed from the local database 35 within minutes from its creation.

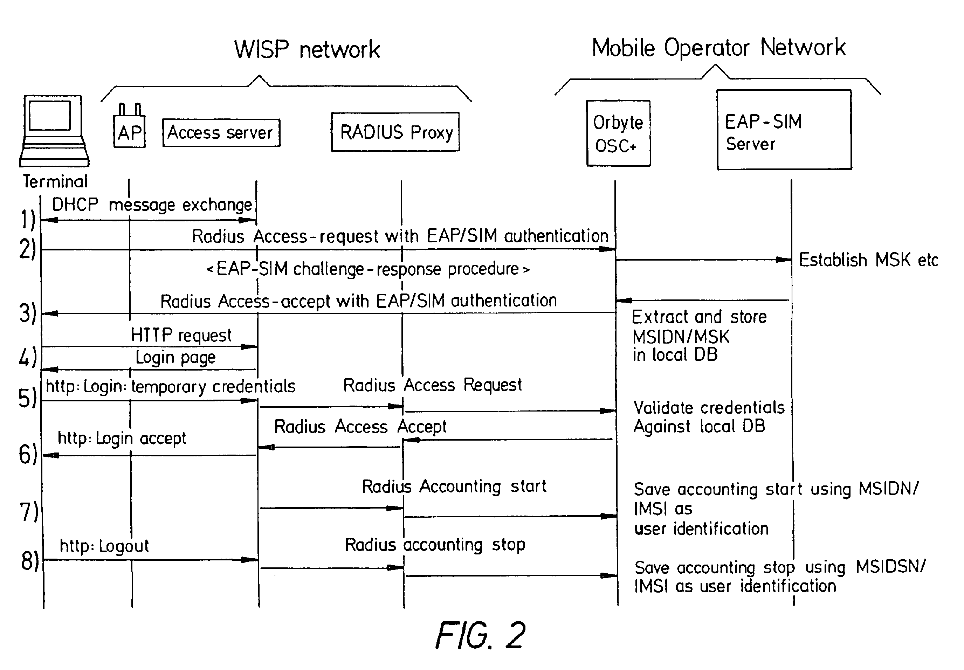

The method according to an embodiment of the invention will now be described in more detail with reference to FIG. 2. However, it should be understood that the exchange of RAIDUS-challenge message to carry the EAP-SIM handshake procedure has been omitted in FIG. 2.

In a first step, 1), a user terminal 40 connects to an access server 23 of the WISP network 20 via an access point, AP, 25. The user terminal 40 is assigned an IP address from the access server (or AP) a through the exchange of Dynamic Host Control Protocol, DHCP, messages.

In a second step, 2), the user terminal 40 sends a RADIUS access request with EAP-SIM authentication to a mobile operator server OSC+ 33 comprised in the mobile operator network 30. The mobile operator server OSC+ 33 forwards the RADIUS access request to an EAP-SIM server 31. The EAP-SIM server 31 creates Master Session Keys, MSK, and Chargeable User ID, CUID, parameters etc.

In a third step, 3), the EAP-SIM server 31 sends a RADIUS access accept message to the mobile operator server OSC+ 33 that extracts the MSK and the CUID parameters from the RADIUS access accept message and uses this information to derive a temporary username and password and then stores these parameters as in a local database 35. The RADIUS access accept message with EAP-SIM authentication is sent to the user terminal 40 via the WISP network 20.

In a fourth step, 4), the user terminal 40 sends an HTTP request to the access server 23 and the access server 23 sends a login page back to the user terminal 40.

In a fifth step, 5), the user by means of the user terminal 40 performs a login towards the WISP access server 23. In the login procedure, the temporary credentials are used, e.g. on the form usr=IMSI@MobileOperator.com/pw=f(MSK), where usr is the username, IMSI is the International Mobile Subscriber Identity, the MobileOperator.com is the realm (domain name) of the mobile operator, pw is the password, and MSK is the Master Session Key. It should however be understood that credentials can be derived by slightly different methods, in particular it is possible to opt away from the pseudonym usage and thus use the IMSI carried in the phase 1 exchange as username also in the phase 2 exchange.

The WISP access server 23 forwards a RADIUS access request to the WISP RADIUS proxy 22. The WISP RADIUS proxy 22 inspects the realm part of the username, i.e. the MobileOperator.com and forwards the RADIUS access request to the mobile operator server OSC+ 33 comprised in the mobile operator network of the corresponding mobile operator.

In a sixth step, 6), the mobile operator server OSC+ 33 of the mobile operator validates the credentials, i.e. the username/password, against the local database 35. The mobile operator server OSC+ 33 will match the supplied username/password with the temporary account stored in the local database 35. If credentials match, a RADIUS access accept message will be sent from the mobile operator server OSC+ 33 towards the WISP RADIUS proxy 22. The WISP RADIUS proxy 22 forwards the RADIUS access accept message to the WISP access server 23, which sends a login accept message to the user terminal 40.

In a seventh step, 7), the access server 23 sends a RADIUS accounting start message to the mobile operator server OSC+ 33 via the RADIUS proxy 22. The mobile operator server OSC+ 33 saves accounting start using IMSI as user identification and temporary credentials will be removed from the local database 35. Unused credentials will be automatically removed from the local database 35 within minutes from its creation.

In an eighth step, 8), the user gives a logout command by means of the user terminal 40. The logout is forwarded to the RADIUS access server 23 to the mobile operator server OSC+ 33 via the RADIUS proxy 22. The mobile operator server OSC+ 33 saves accounting stop using IMSI as user identification.

FIG. 3 and 4 schematically show authentication protocol stacks in the case of an EAP-SIM login and an UAM login, respectively. In FIG. 3 it should be noted that the RADIUS proxy will only be used if desired as an extra measure to mitigate DOS attacks towards OSC+/EAP-SIM Servers.

The present invention has been described with references to an embodiment. However it should be understood that the invention can be modified in different ways without departing from the inventive concept, which is only delimited by the accompanying claims. For example, it is not necessary to use IMSI as username, and one can for example use MSISDN instead of IMSI or use the same username as in the original RAIDUS request (phase 1). Further, it is possible to use other password derivation algorithms and it is possible to use other bearer protocol than RADIUS for EAP, for example HTTP.

## Claims

1. A method for SIM-based authentication over access networks (20, 30) not supporting the security protocol 802.1X, comprising the steps of:
- SIM-authentication, wherein a user, by means of a user terminal (40) and via a WISP network (20), authenticates towards an EAP-SIM server (31) comprised in a mobile operator network (30),
- in a mobile operator server OSC+ (33) comprised in the mobile operator network (30), extracting from an RADIUS access accept message emanated from the EAP-SIM server (31) in the mobile operator network (30), information used to derive temporarily credentials, e.g. Master Session Key, MSK, and Chargeable User ID, CUID, parameters, , and storing the temporary credentials, username/password, in a local database (35);
- deriving temporary credentials, username/password, in the user terminal (40) from information stored on a SIM-card and
- back-authentication, wherein a user performs a login towards a WISP access server (23) using said username/password, and wherein said WISP access server (23) forwards an access request and said username/password to said mobile operator server OSC+ (33); and
- in said mobile operator server OSC+ (33), matching said forwarded username/password with the temporary credentials stored in said local database (35), and if credentials match, sending a RADIUS-access accept message towards a WISP RADIUS proxy (22) that sends a login accept message to said user terminal (40).

2. The method of claim 1, wherein the SIM-authentication procedure adhere to the EAP-SIM procedure.

3. The method of claim 1 or 2, wherein the back-authentication is performed by a Universal Access Method, UAM.

4. The method of any preceding claim, wherein the temporary credentials are of the form: usr=IMSI@MobileOperator.com/pw=f(MSK), where usr is the usemame, IMSI is the International Mobile Subscriber Identity and the MobileOperator.com is the realm part of the mobile operator, pw is the password, and MSK is the Master Session Key and f(MSK) denotes some function to derive a syntactically correct password from the MSK.

5. The method of any preceding claim, wherein said WISP RADIUS proxy (22) inspects the realm part of said usemame.

6. The method of any preceding claim, wherein unused credentials will be automatically removed from the local database (35).

7. A system for SIM-based authentication over access networks (20, 30) not supporting the security protocol 802.1 x, said system comprising a WISP network (20) communicatively connected to a mobile operator network (30) by means of a routers (24, 34), comprising :
- a user terminal (40) configured to perform SIM-authentication, whereby said user terminal (40) is configured to, via said WISP network (20), authenticate towards an EAP-SIM server (31) comprised in said mobile operator network (30),
- a mobile operator server OSC+ (33) configured to extract information used to derive temporarily credentials, e.g. Master Session Key, MSK, and Chargeable User ID, CUID, parameters, from an RADIUS access accept message emanated from said EAP-SIM server (31); configured to store these as username/password in a local database (35);
- said user terminal (40) further being configured to derive temporary credentials, username/password, from information stored on a SIM-card, configured for back-authentication, whereby said user terminal (40) is configured to perform a login towards a WISP access server (23) using said username/password, and whereby said WISP access server (23) is configured to forward an access request and said username/password to said mobile operator server OSC+ (33); and
- said mobile operator server OSC+ (33) further being configured to match said forwarded username/password with the temporary account stored in said local database (35), and if credentials match, configured to send a RADIUS-access accept message towards a WISP RADIUS proxy (22) that is configured to send a login accept message to said user terminal (40).

8. The system of claim 7, wherein the SIM-authentication procedure adhere to the EAP-SIM procedure.

9. The system of claim 7 or 8, wherein said back-authentication is configured to be performed by a Universal Access Method, UAM.

10. The system of any of the claims 7 - 9, wherein said temporary credentials are configured to be of the form: usr=ISMI@MobileOperator.com/pw=f(MSK), where usr is the username, IMSI is the International Mobile Subscriber Identity, the MobileOperator.com is the web address of the mobile operator, pw is the password, and MSK is the Master Session Key, and f(MSK) denotes some function to derive a valid password from the MSK.

11. The system of any of the claims 7 - 10, wherein said WISP RADIUS proxy (22) is configured to inspect the realm part of the username/password.

12. The system of any of the claims 7 - 12, wherein said mobile operator server OSC+ (33) is configured to automatically remove unused credentials from said local database (35).

## Patentansprüche

1. Verfahren für die SIM-basierte Authentifizierung über Zugangsnetze (20, 30), welche das Sicherheitsprotokoll 802.1x nicht unterstützen, das die folgenden Schritte aufweist:
- SIM-Authentifizierung, wobei sich ein Benutzer mit Hilfe eines Benutzerendgeräts (40) und über ein WISP-Netz (20) bei einem EAP-SIM-Server (31), welcher in einem Mobilbetreibernetz (30) beinhaltet ist, authentifiziert,
- in einem in dem Mobilbetreibernetz (30) beinhalteten Mobilbetreiberserver OSC+ (33): Extrahieren von Informationen, die verwendet werden, um vorläufige Berechtigungsnachweise, z.B. einen Master Session Key MSK (Hauptsitzungsschlüssel), und gebührenverrechenbare Benutzerkennungsparameter, CUID-Parameter, zu erzeugen, aus einer RADIUS-Zugangsbewilligungsnachricht, die von dem EAP-SIM-Server (31) in dem Mobilbetreibernetz (30) ausgeht, und Speichern der vorläufigen Berechtigungsnachweise, Benutzername/Kennwort, in einer lokalen Datenbank (35);
- Ableiten von vorläufigen Berechtigungsnachweisen, Benutzername/Kennwort, in dem Benutzergerät (40) aus Informationen, die auf einer SIM-Karte gespeichert sind, und
- Rückwärtsauthentifizierung, wobei ein Benutzer unter Verwendung des Benutzernamens/Kennworts eine Anmeldung an einem WISP-Zugangsserver (23) durchführt, und wobei der WISP-Zugangsserver (23) eine Zugangsanforderung und den Benutzernamen/das Kennwort an den Mobilbetreiberserver OSC+ (33) weiterleitet; und
- in dem Mobilbetreiberserver OSC+ (33): Abgleichen des weitergeleiteten Benutzernamens/Kennworts mit den vorläufigen Berechtigungsnachweisen, die in der lokalen Datenbank (35) gespeichert sind, und wenn die Berechtigungsnachweise übereinstimmen, Senden einer RADIUS-Zugangsbewilligungsnachricht an einen WISP-RADIUS-Proxy (22), der eine Anmeldungsannahmenachricht an das Benutzergerät (40) sendet.

2. Verfahren nach Anspruch 1, wobei das SIM-Authentifizierungsverfahren das EAP-SIM-Verfahren einhält.

3. Verfahren nach Anspruch 1 oder 2, wobei die Rückwärtsauthentifizierung mit einem universellen Zugangsverfahren (Universal Access Method) UAM durchgeführt wird.

4. Verfahren nach einem der vorangehenden Ansprüche, wobei die vorläufigen Berechtigungsnachweise die folgende Form haben: usr=IMSI@MobileOperator.com/pw=f(MSK), wobei usr der Benutzername ist, IMSI die internationale Mobilteilnehmerkennung ist und MobileOperator.com der Realm-Teil (der Bereichsteil) des Mobilbetreibers ist, pw das Kennwort ist und MSK der Master Session Key ist und f (MSK) eine Funktion bezeichnet, um ein syntaktisch korrektes Kennwort aus dem MSK abzuleiten.

5. Verfahren nach einem der vorangehenden Ansprüche, wobei der WISP-RADIUS-Proxy (22) den Realm-Teil des Benutzernamens prüft.

6. Verfahren nach einem der vorangehenden Ansprüche, wobei unbenutzte Berechtigungsnachweise automatisch aus der lokalen Datenbank (35) entfernt werden.

7. System für die SIM-basierte Authentifizierung über Zugangsnetze (20, 30), die das Sicherheitsprotokoll 802.1x nicht unterstützen, wobei das System ein WISP-Netz (20) aufweist, das mit Hilfe von Routern (24, 34) kommunikationsfähig mit einem Mobilbetreibernetz (30) verbunden ist, wobei es aufweist:
- ein Benutzergerät (40), das konfiguriert ist, um die SIM-Authentifizierung durchzuführen, wobei das Benutzergerät (40) konfiguriert ist, sich über das WISP-Netz (20) bei einem EAP-SIM-Server (31), welcher in einem Mobilbetreibernetz (30) beinhaltet ist, zu authentifizieren,
- einen Mobilbetreiberserver OSC+ (33), der konfiguriert ist, um Informationen, die verwendet werden, um vorläufige Berechtigungsnachweise, z.B. einen Master Session Key MSK (Hauptsitzungsschlüssel), und gebührenverrechenbare Benutzerkennungsparameter, CUID-Parameter, zu erzeugen, aus einer RADIUS-Zugangsbewilligungsnachricht zu extrahieren, die von dem EAP-SIM-Server (31) ausgeht, und konfiguriert ist, um diese als Benutzername/Kennwort, in einer lokalen Datenbank (35) zu speichern;
- wobei das Benutzergerät (40) ferner konfiguriert ist, um vorläufige Berechtigungsnachweise, Benutzername/Kennwort, aus Informationen, die auf einer SIM-Karte gespeichert sind, abzuleiten, und für die Rückwärtsauthentifizierung konfiguriert ist, wobei das Benutzergerät (40) konfiguriert ist, unter Verwendung des Benutzernamens/Kennworts eine Anmeldung an einem WISP-Zugangsserver (23) durchzuführen, und wobei der WISP-Zugangsserver (23) konfiguriert ist, um eine Zugangsanforderung und den Benutzernamen/das Kennwort an den Mobilbetreiberserver OSC+ (33) weiterzuleiten; und
- wobei der Mobilbetreiberserver OSC+ (33) ferner konfiguriert ist, um den weitergeleiteten Benutzernamen/das Kennwort mit dem vorläufigen Benutzerkonto, das in der lokalen Datenbank (35) gespeichert ist, abzugleichen, und wenn die Berechtigungsnachweise übereinstimmen, eine RADIUS-Zugangsbewilligungsnachricht an einen WISP-RADIUS-Proxy (22) zu senden, der konfiguriert ist, um eine Anmeldungsannahmenachricht an das Benutzergerät (40) zu senden.

8. System nach Anspruch 7, wobei das SIM-Authentifizierungsverfahren das EAP-SIM-Verfahren einhält.

9. System nach Anspruch 7 oder 8, wobei die Rückwärtsauthentifizierung mit einem universellen Zugangsverfahren (Universal Access Method) UAM durchgeführt wird.

10. System nach einem der Ansprüche 7 - 9, wobei die vorläufigen Berechtigungsnachweise in der folgenden Form aufgebaut sind: usr=IMSI@MobileOperator.com/pw=f(MSK), wobei usr der Benutzername ist, IMSI die internationale Mobilteilnehmerkennung ist und MobileOperator.com die Internetadresse des Mobilbetreibers ist, pw das Kennwort ist und MSK der Master Session Key ist und f(MSK) eine Funktion bezeichnet, um ein gültiges Kennwort aus dem MSK abzuleiten.

11. System nach einem der Ansprüche 7 - 10, wobei der WISP-RADIUS-Proxy (22) konfiguriert ist, um den Realm-Teil des Benutzernamens/Kennworts zu prüfen.

12. System nach einem der Ansprüche 7 - 12, wobei der Mobilbetreiberserver OSC+ (33) konfiguriert ist, um unbenutzte Berechtigungsnachweise automatisch aus der lokalen Datenbank (35) zu entfernen.

## Revendications

1. Procédé d'authentification à base de SIM sur des réseaux d'accès (20, 30) qui ne supportent pas le protocole de sécurité 802.1X, comprenant les étapes consistant en :
- une authentification à base de SIM, dans laquelle un utilisateur, à l'aide d'un terminal utilisateur (40) et par l'intermédiaire d'un réseau WISP (20), s'authentifie auprès d'un serveur EAP - SIM (31) compris dans un réseau d'opérateur mobile (30),
- dans un serveur d'opérateur mobile OSC+ (33) compris dans le réseau d'opérateur mobile (30), une extraction, à partir d'un message d'acceptation d'accès RADIUS en provenance du serveur EAP - SIM (31) dans le réseau d'opérateur mobile (30), d'informations utilisées pour obtenir de manière provisoire des justificatifs d'identité, par exemple des paramètres de clé de session maître, MSK (Master Session Key), et d'identifiant d'utilisateur taxable, CUID (Chargeable User ID), et un stockage des justificatifs d'identité provisoires, nom d'utilisateur / mot de passe, dans une base de données locale (35) ;
- une obtention de justificatifs d'identité provisoires, nom d'utilisateur / mot de passe, dans le terminal utilisateur (40) à partir des informations stockées sur une carte SIM et
- une rétro-authentification, dans laquelle un utilisateur exécute une procédure de connexion vers un serveur d'accès WISP (23) en utilisant ledit nom d'utilisateur / mot de passe, et dans lequel ledit serveur d'accès WISP (23) fait suivre une demande d'accès et ledit nom d'utilisateur / mot de passe audit serveur d'opérateur mobile OSC+ (33) ; et
- dans ledit serveur d'opérateur mobile OSC+ (33), la mise en correspondance dudit nom d'utilisateur / mot de passe transmis avec les justificatifs d'identité provisoires stockés dans ladite base de données locale (35), et si les justificatifs d'identité correspondent, l'envoi d'un message d'acceptation d'accès RADIUS vers un proxy RADIUS WISP (22) qui envoie un message d'acceptation de connexion audit terminal utilisateur (40).

2. Procédé selon la revendication 1, dans lequel la procédure d'authentification à base de SIM adhère à la procédure EAP - SIM.

3. Procédé selon la revendication 1 ou 2, dans lequel la rétro-authentification est exécutée par un procédé d'accès universel, UAM (Universal Access Method).

4. Procédé selon l'une quelconque des revendications précédentes, dans lequel les justificatifs d'identité provisoires sont de la forme : usr=IMSI@MobileOperator.com/pw=f(MSK), où usr est le nom d'utilisateur, IMSI est l'identité internationale de l'abonné mobile (International Mobile Subscriber Identity) et MobileOperator.com est la partie domaniale de l'opérateur mobile, pw est le mot de passe, et MSK est la clé de session maître (Master Session Key) et f(MSK) désigne une certaine fonction permettant d'obtenir un mot de passe correct de manière syntaxique à partir de MSK.

5. Procédé selon l'une quelconque des revendications précédentes, dans lequel ledit proxy RADIUS WISP (22) examine la partie domaniale dudit nom d'utilisateur.

6. Procédé selon l'une quelconque des revendications précédentes, dans lequel les justificatifs d'identité inutilisés seront retirés de manière automatique de la base de données locale (35).

7. Système d'authentification à base de SIM sur des réseaux d'accès (20, 30) qui ne supportent pas le protocole de sécurité 802.1x, ledit système comprenant un réseau WISP (20) connecté de manière communicante à un réseau d'opérateur mobile (30) au moyen de routeurs (24, 34), comprenant :
- un terminal utilisateur (40) configuré de manière à exécuter une authentification à base de SIM, grâce à quoi ledit terminal d'utilisateur (40) est configuré, par l'intermédiaire dudit réseau WISP (20), pour s'authentifier auprès d'un serveur EAP - SIM (31) compris dans ledit réseau d'opérateur mobile (30),
- un serveur d'opérateur mobile OSC+ (33) configuré de manière à extraire des informations utilisées pour obtenir de façon provisoire des justificatifs d'identité, par exemple des paramètres de clé de session maître, MSK, et d'identifiant d'utilisateur taxable, CUID, à partir d'un message d'acceptation d'accès RADIUS en provenance dudit serveur EAP - SIM (31) ; configuré de manière à stocker ces derniers comme étant un nom d'utilisateur / mot de passe dans une base de données locale (35) ;
- ledit terminal utilisateur (40) étant configuré en outre de manière à obtenir des justificatifs d'identité provisoires, nom d'utilisateur / mot de passe, à partir des informations stockées dans une carte SIM, configurée pour une rétro-authentification, grâce à quoi ledit terminal utilisateur (40) est configuré de manière à exécuter une procédure de connexion vers un serveur d'accès WISP (23) en utilisant ledit nom d'utilisateur / mot de passe, et grâce à quoi ledit serveur d'accès WISP (23) est configuré de manière à faire suivre une demande d'accès et ledit nom d'utilisateur / mot de passe audit serveur d'opérateur mobile OSC+ (33) ; et
- ledit serveur d'opérateur mobile OSC+ (33) est configuré en outre de manière à mettre en correspondance ledit nom d'utilisateur / mot de passe transmis avec le compte provisoire stocké dans ladite base de données locale (35), et si les justificatifs d'identité correspondent, il est configuré de manière à envoyer un message d'acceptation d'accès RADIUS vers un proxy RADIUS WISP (22) qui est configuré de manière à envoyer un message d'acceptation de connexion audit terminal utilisateur (40).

8. Système selon la revendication 7, dans lequel la procédure d'authentification à base de SIM adhère à la procédure EAP - SIM.

9. Système selon la revendication 7 ou 8, dans lequel ladite rétro-authentification est configurée de manière à être exécutée par un procédé d'accès universel, UAM.

10. Système selon l'une quelconque des revendications 7 à 9, dans lequel lesdits justificatifs d'identité provisoires sont configurés de manière à être de la forme : usr=IMSI@MobileOperator.com/pw=f(MSK), où usr est le nom d'utilisateur, IMSI est l'identité internationale de l'abonné mobile (International Mobile Subscriber Identity), MobileOperator.com est l'adresse web de l'opérateur mobile, pw est le mot de passe, et MSK est la clé de session maître (Master Session Key) et f(MSK) désigne une certaine fonction permettant d'obtenir un mot de passe valide à partir de MSK.

11. Système selon l'une quelconque des revendications 7 à 10, dans lequel ledit proxy RADIUS WISP (22) est configuré de manière à examiner la partie domaniale du nom d'utilisateur / mot de passe.

12. Système selon l'une quelconque des revendications 7 à 11, dans lequel ledit serveur d'opérateur mobile OSC+ (33) est configuré de manière à retirer automatiquement les justificatifs d'identité inutilisés de ladite base de données locale (35).
